# EUROPÄISCHE PATENTSCHRIFT

(11) **EP 2 718 142 B1**
(45) Veröffentlichungstag und Bekanntmachung des Hinweises auf die Patenterteilung: **03.05.2017**
(21) Anmeldenummer: 12729920.4
(22) Anmeldetag: 08.06.2012
(51) Int. Cl.: B60M 1/30

(54) **STROMSCHIENE, MONTAGE- UND DEMONTAGEVERFAHREN SOWIE ANORDNUNG AUS ZUSAMMENGESETZTEN STROMSCHIENEN**
POWER RAIL, MOUNTING AND DISMOUNTING METHOD AND ARRANGEMENT COMPOSED OF COMBINED POWER RAILS
BARRE CONDUCTRICE, PROCÉDÉ DE MONTAGE ET DE DÉMONTAGE AINSI QUE SYSTÈME DE BARRES CONDUCTRICES ASSEMBLÉES

(30) Priorität: 08.06.2011 DE 102011050920
(43) Veröffentlichungstag der Anmeldung: 16.04.2014
(73) Patentinhaber: Hammerer Aluminium Industries Extrusion GmbH, 5282 Ranshofen (AT); SPL Powerlines Austria GmbH & Co. KG, 2120 Wolkersdorf im Weinviertel (AT)
(72) Erfinder: KRANYCAN, Jürgen, A-4780 Schärding (AT); ESTERBAUER, Erwin, A-5282 Ranshofen (AT); JUKL, Thomas, A-2301 Rutzendorf (AT)
(74) Vertreter: Kotitschke & Heurung Partnerschaft mbB
(86) Internationale Anmeldenummer: PCT/EP2012/060941
(87) Internationale Veröffentlichungsnummer: WO 2012/168461

(56) Entgegenhaltungen:
- WO-A2-2011/082311
- DE-A1- 2 147 956
- DE-A1- 2 219 252

## Beschreibung

Die Erfindung betrifft eine Stromschiene für bewegliche Stromverbraucher, insbesondere für elektrisch getriebene Fahrzeuge, vorzugsweise Schienenfahrzeuge, mit einem Trägerprofil, das zwei Trägerprofilelemente umfasst, und einem Kopfprofil, das zwei gegenüberliegende seitliche Abschnitte aufweist und das mit dem Trägerprofil formschlüssig und/oder kraftschlüssig verbunden ist.

Darüber hinaus bezieht sich die Erfindung auf ein System aus einer Vielzahl von axial zusammengesetzten Stromschienen und ein Verfahren zur Montage oder Demontage einer Stromschiene.

Üblicherweise dienen gattungsgemäße und aus dem Stand der Technik bekannte Stromschienen als Zuleitung für den elektrischen Strom, um beispielsweise beweglichen Stromverbrauchern, wie elektrisch getriebenen Schienenfahrzeugen (S-Bahn, U-Bahn, Monorails bzw. Einschienenbahn usw.), Strom zur Verfügung stellen zu können. Ebenso kommen solche bekannten Stromschienen aber auch im Zusammenhang mit weiteren aus dem Stand der Technik bekannten beweglichen Stromverbrauchern (z.B. in Werkstatthallen verwendete schienengeführte Stromverbraucher) zum Einsatz.

Im Zusammenhang mit elektrisch getriebenen Schienenfahrzeugen, wie beispielsweise S-Bahn, U-Bahn, Einschienenbahn, usw. werden die gattungsgemäßen Stromschienen je nach Bedarfsfall an unterschiedlichen Stellen vorgesehen bzw. montiert. Beispielswiese werden Stromschienen oftmals seitlich von den Fahrschienen elektrisch getriebener Schienenfahrzeuge neben den Fahrschienen laufend montiert.

In anders gelagerten Fällen können derartige Stromschienen aber auch über den Fahrschienen verlaufen. Derartige Fälle treten beispielsweise in Werkstatthallen oder in Tunneln auf.

Üblicherweise erfolgt die Stromzuführung von der Stromschiene zum elektrisch getriebenen Schienenfahrzeug über an der Stromschiene schleifende Stromabnehmer. Im Falle von beispielsweise U- und S-Bahnen sind derartige schleifende Stromabnehmer bei seitlich neben dem Gleis angeordneten Stromschienen als Stromabnehmerbügel oder Schleifschuhe ausgeführt. Diese werden in der Regel schleifend auf, seitlich oder unter der Stromschiene entlang geführt, wobei derartige Schleifschuhe oftmals seitlich an den Drehgestellen der U- und S-Bahnen angebaut sind. Die Rückleitung des Stromes erfolgt bei derartigen Systemen vorzugsweise über die Räder und die Fahrschienen.

Solche Stromschienen werden im Zusammenhang mit elektrisch getriebenen Schienenfahrzeugen häufig als sogenannte "dritte Schiene" bezeichnet und sind ausschließlich zur Stromzuführung und nicht zur Aufnahme etwaiger Schienenfahrzeuggewichtskräfte ausgelegt.

Um einem übermäßigen Verschleiß der Stromschiene, der durch den Stromabgriff anhand des vorstehend erläuterten Stromabnehmers hervorgerufen wird, entgegenzuwirken, umfassen gattungsgemäße Stromschienen neben einem Trägerprofil, das beispielsweise aus einem elektrisch leitenden Leichtmetallwerkstoff hergestellt sein kann, ein mit dem Trägerprofil elektrisch leitend verbundenes Halteprofil, welches vorzugsweise als Kopfprofilband ausgeführt wird und im Vergleich zum Trägerprofil aus einem verschleißbeständigeren Material hergestellt ist. Dementsprechend wird der übermäßige Verschleiß der Stromschiene dadurch verringert, dass die Stromabnahme durch den Stromabnehmerbügel oder die Schleifschuhe des Schienenfahrzeugs an dem verschleißbeständigerem Halteprofil bzw. Kopfprofilband erfolgt, während das Trägerprofil ausschließlich zur Stromführung dient.

Ein Beispiel einer gattungsgemäßen Stromschiene ist in der Druckschrift DE 10 2005 004 547 A1 gezeigt.

Die in dieser Druckschrift beschriebene Stromschiene ist als ein Verbundprofil ausgeführt, das ein aus einem Leichtmetallwerkstoff stranggepresstes Trägerprofil und ein die Kopffläche des Trägerprofils überspannendes Profilband aus einem härteren Metall aufweist, um den Verschleiß der Stromschiene durch den Stromabgriff zu verringern. Um das Profilband an dem Trägerprofil zu befestigen, wird das Profilband mit einem Einschubstab verschweißt, welcher wiederum in einem in dem Trägerprofil ausgebildeten Schlitz eingreift.

Unvorteilhaft bei der aus der DE 10 2005 004 547 A1 bekannten Stromschiene ist daher, dass deren Montage äußerst aufwändig ist. Insbesondere ist das Profilband stets mit dem Einschubstab zu verschweißen, um so das Profilband an dem Trägerprofil zu befestigen. Auch die Demontage dieser Stromschiene ist damit einhergehend mit großem Aufwand verbunden.

Weiterhin bringt diese Stromschiene den Nachteil, dass bei Verbindung bzw. Kopplung mehrerer solcher Stromschienen in deren axialer Richtung bzw. Längsrichtung stets entsprechende Verbindungsflansche vorzusehen sind, um benachbarte bzw. angrenzende Stromschienen miteinander verbinden zu können. Dies wird beispielsweise dadurch bewerkstelligt, indem die jeweiligen Trägerprofile und Profilbänder an den entsprechenden Stellen ausgespart und dann miteinander verschraubt werden, oder indem weitere elektrisch leitfähige Profilelemente an Seitenflächen der Trägerprofile unterschiedlicher Stromschienen, insbesondere an deren Enden, angeschraubt werden.

Aus der Druckschrift DE 2 219 252 A1 ist eine Stromschiene bekannt, die ein zweiteiliges Trägerprofil aus Aluminium und ein aus verschleißbeständigem Stahl hergestelltes Kopfprofil aufweist. Die beiden Trägerprofile werden kraftschlüssig miteinander mittels Schrauben oder Keile gegen das C-förmige Kopfprofil verspannt.

Eine weitere herkömmliche Stromschiene ist in der Druckschrift DE 2 147 956 A1 beschrieben, deren Aufbau dem der aus der Druckschrift DE 2 219 252 A1 bekannten Stromschiene ähnlich ist. Auch hier sind die beiden Trägerprofile mittels einer Schraubverbindung gegeneinander verspannt. Ebenso ist aus der nachveröffentlichten Druckschrift WO 2011/082311 A2 eine gattungsgemäße Stromschiene bekannt.

Der Erfindung liegt die Aufgabe zugrunde, die gattungsgemäßen Stromschienen und Montage- oder Demontageverfahren derartiger Stromschienen so weiterzubilden, dass die vorgenannten Nachteile zumindest teilweise überwunden werden. Insbesondere soll durch die Erfindung die Montage- und Demontage solcher Stromschienen vereinfacht und die axiale Verbindung solcher Stromschienen erheblich erleichtert werden. Weiterhin sollen durch die Erfindung zumindest einige üblicherweise bei den gattungsgemäßen Stromschienen anfallende und aufwändige Montage- und Demontageschritte vermieden und gleichzeitig die Flexibilität derartiger Stromschienen im Hinblick auf deren Montage/Demontage erhöht werden.

Diese Aufgabe wird durch die Merkmale der unabhängigen Ansprüche 1 und 14 gelöst.

Vorteilhafte Ausgestaltungen und Weiterbildungen der Erfindung ergeben sich aus den abhängigen Ansprüchen 2 bis 13 und 15 bis 19.

Die erfindungsgemäße Stromschiene für bewegliche Stromverbraucher, insbesondere für elektrisch getriebene Fahrzeuge, vorzugsweise Schienenfahrzeuge, umfasst ein Trägerprofil, das ein erstes Trägerprofilelement und ein zweites Trägerprofilelement umfasst, wobei das erste Trägerprofilelement eine erste Profilelementfläche und das zweite Trägerprofilelement eine zweite Profilelementfläche, die der ersten Profilelementfläche zugewandt ist, aufweist, wobei die erste und die zweite Profilelementfläche zumindest abschnittsweise gekrümmt sind und eine abschnittsweise gekrümmte Fläche bilden, entlang derer die Trägerprofilelemente miteinander gekoppelt sind, und ein Kopfprofil, das einen ersten seitlichen Abschnitt und einen gegenüberliegenden zweiten seitlichen Abschnitt aufweist und das mit dem ersten Trägerprofilelement und dem zweiten Trägerprofilelement formschlüssig und/oder kraftschlüssig verbunden ist, wobei dem Kopfprofil zugewandte Enden der Profilelementflächen näher dem zweiten seitlichen Abschnitt als dem ersten seitlichen Abschnitt angeordnet sind. Die Stromschiene ist dadurch gekennzeichnet, dass die beiden Trägerprofilelemente im Wesentlichen die gleiche Höhe besitzen und durch das Kopfprofil entlang der Fläche formschlüssig und/oder kraftschlüssig miteinander gekoppelt sind.

Die erfindungsgemäße Stromschiene wird demnach durch eine Verbundstromschiene gebildet, die ein mehrteiliges und vorzugsweise aus einem gut elektrisch leitenden Leichtmetall hergestelltes Trägerprofil, gebildet durch die jeweiligen Trägerprofilelemente, und ein Kopfprofil umfasst. Dabei ist das Kopfprofil insbesondere an einer Kopffläche des Trägerprofils elektrisch mit diesem verbunden und umgreift selbiges formschlüssig und/oder kraftschlüssig. Vorzugsweise ist das Trägerprofil zweiteilig ausgebildet. Es sind aber ebenso Ausführungen des Trägerprofils mit mehr als zwei Teilen denkbar. Aufgrund dieser mehrteiligen Ausführung des Trägerprofils lässt sich Letzteres mit besseren technologischen Eigenschaften in mechanischer und elektrischer Hinsicht und kostengünstiger herstellen.

Vorzugsweise werden die Trägerprofilelemente einzeln bzw. separat und nacheinander in das Kopfprofil eingesetzt, wobei durch die entsprechende Ausgestaltung der Trägerprofilelemente zunächst das erste Trägerprofilelement in das Halteprofil eingesetzt und das zweite Trägerprofilelement, von dem ersten Trägerprofilelement geführt, anhand einer "Eindrehbewegung" die form- und/oder kraftschlüssige Verbindung zwischen dem Trägerprofil und dem Kopfprofil herstellt. Mit anderen Worten führt eine Änderung der Lage der Trägerprofilelemente zu einer Änderung der Geometrie, insbesondere der Breite, eines von dem Kopfprofil hintergriffenen bzw. umgriffenen Kopfabschnitts des Trägerprofils. Dadurch kann die form- und/oder kraftschlüssige Verbindung zwischen dem Trägerprofil und dem Kopfprofil in Abhängigkeit von der Lage der Trägerprofilelemente zueinander hergestellt oder aufgehoben werden. Insbesondere bezeichnet die Lage der Trägerprofilelemente zueinander eine Lage, bei der die Trägerprofilelemente zumindest abschnittsweise entlang ihrer Längserstreckungsrichtung einander zugewandt sind.

Unter der formschlüssigen Verbindung ist im Rahmen dieser Offenbarung eine Verbindung zu verstehen, bei welcher einer der Verbindungspartner einem anderen quasi im Weg steht. So stellen die in das Kopfprofil eingesetzten Trägerprofilelemente in einer entsprechenden Lage zueinander die formschlüssige Verbindung mit dem Halteprofil her und sind zumindest in der entsprechenden Lage nicht aus dem Kopfprofil herausnehmbar. Unter der kraftschlüssigen Verbindung ist in diesem Zusammenhang eine Verbindung zu verstehen, die eine Normalkraft auf die miteinander zu verbindenden Flächen voraussetzt; d.h. im gegebenen Fall zwischen den einander angrenzenden Flächen der Trägerprofilelemente sowie zwischen einander angrenzenden Flächen der Trägerprofilelemente und dem Kopfprofil. Ihre gegenseitige Verschiebung wird demnach verhindert, solange die durch die Haftreibung bewirkte Gegenkraft nicht überschritten wird. Folglich ist unter der kraftschlüssigen Verbindung zumindest ein abschnittsweise Klemmen oder Verspannen zwischen den Trägerprofilelementen und dem Kopfprofil zu verstehen, wodurch letztlich der Kraftschluss bewirkt wird.

Durch die erfindungsgemäße Ausgestaltung der Trägerprofilelemente kann beispielsweise bei stark abgenutztem Kopfprofil die erfindungsgemäße Stromschiene leicht in seine Einzelteile zerlegt werden. Die Wiederverwertbarkeit einiger Elemente der erfindungsgemäßen Stromschiene wird dadurch erheblich erhöht. Beispielsweise können entweder die Trägerprofilelemente oder das Kopfprofil ausgetauscht werden. Mit anderen Worten ist das Zusammenbauprinzip der Stromschiene durch Kombination von in diesem Fall drei Profilteilen, nämlich den Trägerprofilelementen und dem Kopfprofil, mit dem Resultat einer form- und kraftschlüssigen Verbindung durch eine Art Eindrehmechanismus und einem anschließenden einzigen Fixiermechanismus zwischen den Trägerprofilelementen stark vereinfacht. Dabei ist der Fixierverbindungsprozess zwischen den Trägerprofilelementen vorzugsweise so zu wählen, dass dieser in keiner Weise die Werkstoffeigenschaften im Übergang zwischen dem Kopfprofil und dem Trägerprofil beeinträchtigt. Der Einsatz der Trägerprofilelemente in das Kopfprofil erfolgt insbesondere senkrecht zu einer Längsrichtung des Trägerprofils oder des Kopfprofils.

Die erfindungsgemäße Stromschiene kann in vorteilhafter Weise derart weitergebildet werden, dass die formschlüssige Verbindung zwischen den Trägerprofilelementen und dem Kopfprofil erst dann ausgebildet ist, wenn die Trägerprofilelemente eine erste bestimmte Lagebeziehung zueinander bei Einsatz in das Kopfprofil erfüllen. Bei Einsatz des ersten Trägerprofilelements in das Kopfprofil und anschließendem Einsatz des zweiten Trägerprofilelements in das Kopfprofil wird demnach die formschlüssige Verbindung erst dann bewerkstelligt, wenn das zweite Trägerprofilelement eine gewisse Lage in Bezug auf das erste Trägerprofilelement erreicht. In dieser Lage lassen sich die Trägerprofilelemente nicht mehr aus dem Kopfprofil herausnehmen, da die formschlüssige Verbindung die Entnahme der Trägerprofilelemente blockiert. Da in dieser Lage aber vorzugsweise noch keine kraftschlüssige Verbindung vorliegt, handelt es sich um eine lose formschlüssige Verbindung.

Weiterhin kann die erfindungsgemäße Stromschiene so verwirklicht werden, dass die kraftschlüssige Verbindung zwischen den Trägerprofilelementen und dem Kopfprofil erst dann ausgebildet ist, wenn die Trägerprofilelemente eine zweite bestimmte Lagebeziehung zueinander bei Einsatz in das Kopfprofil erfüllen. Gelangt das zweite Trägerprofilelement schließlich in eine weitere bestimmte Lage in Bezug auf das erste Trägerprofilelement, wird aufgrund einer Verspannung bzw. Verklemmung beider Trägerprofilelemente und dem Kopfprofil auch die kraftschlüssige Verbindung (zusätzlich zu der formschlüssigen Verbindung) zwischen diesen Komponenten hergestellt.

Darüber hinaus wird die erfindungsgemäße Stromschiene derart umgesetzt, dass das erste Trägerprofilelement und das zweite Trägerprofilelement derart ausgestaltet sind, dass die Trägerprofilelemente bei Ausbildung des Trägerprofils über jeweilige Profilelementflächen aneinander angrenzen, wobei die jeweiligen Profilelementflächen der Trägerprofilelemente zumindest abschnittsweise gekrümmt sind. Vorzugsweise sind die gekrümmten Flächen der Trägerprofilelemente so ausgestaltet, dass das zweite Trägerprofilelement über dessen gekrümmte Fläche an der gekrümmten Fläche des ersten und bereits in das Halteprofil eingesetzten Trägerprofilelements gleiten kann, um so im Nachgang zu dem ersten Trägerprofilelement in das Halteprofil eingesetzt zu werden, bis schließlich die form- und kraftschlüssige Verbindung mit dem Halteprofil erzielt ist.

Zumindest die gekrümmten Flächen der Trägerprofilelemente stellen somit Gleitflächen bzw. Führungsflächen dar, welche die Eindrehführungsbewegung des zweiten Trägerprofilelements relativ zu dem ersten Trägerprofilelement festlegen. Durch die Ausgestaltung der gekrümmten Flächen der Trägerprofilelemente wird somit die Art bzw. der Verlauf der Eindrehbewegung des zweiten Trägerprofilelements vorgegeben.

Des Weiteren kann die erfindungsgemäße Stromschiene so ausgeführt werden, dass das durch die Trägerprofilelemente ausgebildete Trägerprofil einen Abschnitt aufweist, der von dem Halteprofil zumindest teilweise hintergriffen oder umgriffen wird, um den Formschluss und/oder Kraftschluss zwischen dem Trägerprofil und dem Halteprofil zu bilden. In diesem Fall kann eine besonders stabile Verbindung zwischen den Trägerprofilelementen und dem Halteprofil erzielt werden, da die Trägerprofilelemente mit dem Halteprofil sowohl einen Formschluss als auch einen Kraftschluss eingehen kann.

Ferner kann die erfindungsgemäße Stromschiene derart ausbildet werden, dass das Trägerprofil durch ein Doppel-T-Profil gebildet wird und/oder das Halteprofil durch ein C-Profil gebildet wird. Dementsprechend umgreift bzw. hintergreift das C-förmige Halteprofil bzw. Kopfprofil einen Abschnitt des Doppel-T-Profils, insbesondere den Kopfabschnitt des Trägerprofils bzw. die Kopfabschnitte der Trägerprofilelemente. Vorzugsweise kann das C-förmige Halteprofil bzw. Kopfprofil zum einen das Trägerprofil umschließen und zum anderen so ausgeführt sein, dass es mit dem Trägerprofil verkrallt. Dadurch wird eine Längsverschiebung der Trägerprofilelemente relativ zu dem Kopfprofilband weitgehend vermieden.

Weiterhin kann die erfindungsgemäße Stromschiene so weitergebildet werden, dass das Material des Kopfprofils in Bezug auf das Material des Trägerprofils, insbesondere der Trägerprofilelemente, verschleißbeständiger ist. Das verschleißbeständige Kopfprofil ist C-förmig ausgeführt und vorzugsweise auch in gewissem Maße federelastisch ausgelegt, wodurch das Herstellen der form- und/oder kraftschlüssigen Verbindung zwischen den Trägerprofilelementen und dem Halteelement begünstigt wird. Beispielsweise kann vorgesehen sein, dass sich das C-förmige Kopfprofil bei Einsatz des zweiten Trägerprofilelements und bereits eingesetztem ersten Trägerprofilelement geringfügig elastisch dehnt bzw. verformt, bis schließlich der Formschluss und/oder der Kraftschluss hergestellt ist.

Weiterhin kann die erfindungsgemäße Stromschiene derart realisiert werden, dass zwischen dem Trägerprofil und dem Kopfprofil und/oder zwischen den Trägerprofilelementen eine leitfähige Schicht zur Begünstigung einer elektrisch leitfähigen Verbindung zwischen dem Trägerprofil und dem Halteprofil und/oder den Trägerprofilelementen angeordnet ist. Die leitfähige Schicht kann insbesondere in fester, pastöser oder flüssiger Form vorliegen und beispielsweise vorab auf das Kopfprofil oder auf das Trägerprofil bzw. zwischen die Trägerprofilelemente aufgebracht bzw. plattiert sein.

Darüber hinaus kann die erfindungsgemäße Stromschiene so vorgesehen sein, dass die Trägerprofilelemente über eine stoffschlüssige Verbindung und/oder formschlüssige Verbindung und/oder eine kraftschlüssige Verbindung miteinander gekoppelt sind. Die beiden Trägerprofile werden nach dem Eindrehen und Vorspannen über ein Fixierverbindungsverfahren, vorzugsweise "Friction Stir Welding" (FSW - Rührreibschweißen) miteinander fest verbunden. Um die fertig montierte Stromschiene in dessen einzelne Bestandteile zu zerlegen, ist dann lediglich erforderlich, einen Trennschritt an der Schweißnaht vorzunehmen. Durch das Rührreibschweißen werden die Trägerprofilelemente thermisch geringfügiger belastet, als dies bei zumindest einigen anderen bekannten Schweißverfahren der Fall ist. Ebenso ist die hierfür aufzuwendende Energie verringert.

Das erfindungsgemäße Verfahren zur Montage oder Demontage der erfindungsgemäßen Stromschiene weist die folgenden Schritte auf:
Herstellen oder Aufheben der formschlüssigen und/oder kraftschlüssigen Verbindung zwischen den Trägerprofilelementen und dem Kopfprofil durch Ändern der Lage des zweiten Trägerprofilelements, während das erste Trägerprofilelement seine Lage zu dem Kopfprofil nicht ändert.

Dadurch ergeben sich die im Zusammenhang mit der erfindungsgemäßen Stromschiene erläuterten Eigenschaften und Vorteile auf gleiche oder ähnliche Weise, weshalb zur Vermeidung von Wiederholungen auf die vorstehenden Ausführungen im Zusammenhang mit der erfindungsgemäßen Stromschiene verwiesen wird.

Gleiches gilt sinngemäß für die folgenden bevorzugten Ausführungsformen des erfindungsgemäßen Verfahrens, weshalb auch diesbezüglich auf die entsprechenden Ausführungen im Zusammenhang mit der erfindungsgemäßen Stromschiene verwiesen wird.

Das erfindungsgemäße Verfahren kann in vorteilhafter Weise derart weitergebildet werden, dass zumindest ein Formschluss zwischen zumindest den Trägerprofilelementen und dem Kopfprofil erst durch Anordnen der Trägerprofilelemente in einer ersten bestimmten Lagebeziehung zueinander bei Einsatz der Trägerprofilelemente in das Kopfprofil hergestellt wird.

Weiterhin kann das erfindungsgemäße Verfahren so ausgeführt werden, dass ein Kraftschluss zwischen den Trägerprofilelementen und dem Kopfprofil erst durch Anordnen der Trägerprofilelemente in einer zweiten bestimmten Lagebeziehung zueinander bei Einsatz der Trägerprofilelemente in das Kopfprofil hergestellt wird.

Darüber hinaus kann das erfindungsgemäße Verfahren derart umgesetzt werden, dass das erste Trägerprofilelement und das zweite Trägerprofilelement derart angeordnet werden, dass die Trägerprofilelemente bei Ausbildung des Trägerprofils über jeweilige zumindest abschnittsweise gekrümmte Profilelementflächen aneinander angrenzen.

Des Weiteren kann das erfindungsgemäße Verfahren so verwirklicht werden, dass ein Abschnitt des durch die Trägerprofilelemente ausgebildeten Trägerprofils von dem Kopfprofil zumindest teilweise hintergriffen oder umgriffen wird, um den Formschluss und/oder Kraftschluss zwischen dem Trägerprofil und dem Kopfprofil zu bilden.

Ferner kann das erfindungsgemäße Verfahren derart durchgeführt werden, dass zwischen dem Trägerprofil und dem Kopfprofil und/oder zwischen den Trägerprofilelementen eine leitfähige Schicht zur Begünstigung einer elektrisch leitfähigen Verbindung zwischen dem Trägerprofil und dem Kopfprofil bzw. zwischen den Trägerprofilelementen angeordnet wird.

Weiterhin kann das erfindungsgemäße Verfahren so weitergebildet werden, dass die Trägerprofilelemente über eine stoffschlüssige Verbindung und/oder eine formschlüssige Verbindung und/oder eine kraftschlüssige Verbindung miteinander gekoppelt werden.

Die erfindungsgemäße Stromschiene für bewegliche Stromverbraucher gemäß einer weiteren Ausführungsform umfasst ein Trägerprofil und ein das Trägerprofil, vorzugsweise formschlüssig und/oder kraftschlüssig, haltendes Kopfprofil, wobei erfindungsgemäß vorgesehen ist, dass das Trägerprofil durch ein erstes Trägerprofilelement und ein mit dem ersten Trägerprofilelement koppelbares zweites Trägerprofilelement ausgebildet wird, deren jeweilige Enden vorzugsweise einen axialen Versatz aufweisen.

Dadurch ergeben sich zumindest teilweise die im Zusammenhang mit der erfindungsgemäßen Stromschiene erläuterten Eigenschaften und Vorteile auf gleiche oder ähnliche Weise, weshalb zur Vermeidung von Wiederholungen auf die vorstehenden Ausführungen im Zusammenhang mit der erfindungsgemäßen Stromschiene verwiesen wird. Die erfindungsgemäße Stromschiene begünstigt demnach in besonders vorteilhafter Weise die Verbindung von Stromschienen in deren Längsrichtung, d. h. die axiale Kopplung einer Vielzahl von Stromschienen wird erleichtert. Vorzugsweise ist das Kopfprofil mit einem Gehrungsschnitt oder auch stufenartigen Abschnitten endseitig ausgeführt. An den entsprechenden Enden der jeweiligen Trägerprofilelemente sind vorzugsweise dem Fachmann bekannte Flanschverbindungen vorgesehen, um ein Trägerprofilelement der einen Stromschiene mit einem anderen Trägerprofilelement der anderen Stromschiene verbinden zu können. Auf vorteilhafte Weise können die Stromschienen somit über die stufenförmige Gestaltung der Trägerprofile aufgrund des axialen Versatzes fix oder beweglich miteinander verbunden werden. Bei beweglicher Verbindung ist eine Endlosvariante ohne zusätzliche Bauteile für eine Dehnfuge zwischen unterschiedlichen Stromschienen möglich. Ebenso ist eine konventionelle Dehnfuge ohne Bearbeitung der Stromschienenenden möglich. Durch die Flanschflächen miteinander verbundener Trägerprofilelemente unterschiedlicher Stromschienen erfolgt ein Stromübergang, ohne dass separate Stromleiter zur Herstellung einer elektrischen Verbindung zwischen den Trägerprofilelementen zwangsweise erforderlich sind. Dabei ist der Querschnitt der Flanschflächen für den Stromübergang variabel und durch den axialen Versatz der Trägerprofilelemente einer Stromschiene festlegbar. Auch in diesem Fall kann sich zwischen den Flanschflächen eine leitfähige Übergangsschicht in fester, pastöser oder flüssiger Form zur Begünstigung der elektrischen Leitfähigkeit zwischen den Stromschienen befinden. Insbesondere werden die abgestuften Enden des Trägerprofils durch den Versatz der Trägerprofilelemente beim Zusammenbau festgelegt. Dabei können die Einzelteile so gestaltet werden, dass nach dem Zusammenbau keine weitere Bearbeitung für eine Verbindung zweier Schienen notwendig ist, wie dies beispielsweise aus dem Stand der Technik durch schräges Abschneiden der Trägerprofilenden vorgenommen wird.

Die erfindungsgemäße Anordnung aus zumindest zwei erfindungsgemäßen Stromschienen sieht vor, dass zur axialen Kopplung der Stromschienen das Ende eines der Trägerprofilelemente der einen Stromschiene mit einem Ende des jeweils anderen der Trägerprofilelemente der anderen Stromschiene gekoppelt ist.

Bevorzugte Ausführungsbeispiele der Erfindung werden nachfolgend anhand der Figuren beispielhaft erläutert.

Es zeigen:
Fig. 1 eine perspektivische Darstellung einer erfindungsgemäßen Stromschiene gemäß einem ersten Ausführungsbeispiel der Erfindung;
Fig. 2 eine Darstellung der erfindungsgemäßen Stromschiene von Fig. 1 im Querschnitt;
Fig. 3a)-c) diverse perspektivische Darstellungen der erfindungsgemäßen Stromschiene von Fig. 1 zu unterschiedlichen Montageschritten;
Fig. 4a)-c) diverse Darstellungen der erfindungsgemäßen Stromschiene von Fig. 1 im Querschnitt zu unterschiedlichen Montageschritten;
Fig. 5 eine perspektivische Darstellung einer erfindungsgemäßen Stromschiene gemäß einem zweiten Ausführungsbeispiel der Erfindung;
Fig. 6 eine vergrößerte Darstellung des in Fig. 5 gekennzeichneten Bereichs;
Fig. 7 eine perspektivische Darstellung einer erfindungsgemäßen Anordnung von erfindungsgemäßen Stromschienen von Figur 5 vor der axialen Kopplung der erfindungsgemäßen Stromschienen; und
Fig. 8 eine perspektivische Darstellung der erfindungsgemäßen Anordnung von erfindungsgemäßen Stromschienen von Figur 5 nach der axialen Kopplung der erfindungsgemäßen Stromschienen.

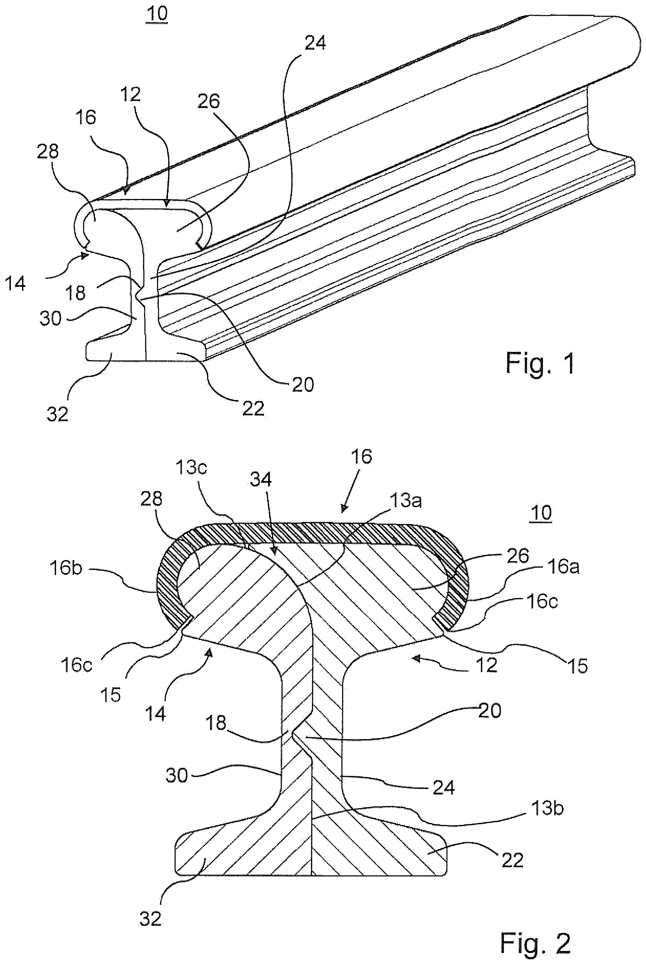

Fig. 1 zeigt eine perspektivische Darstellung einer erfindungsgemäßen Stromschiene 10 gemäß einem ersten Ausführungsbeispiel der Erfindung, während Fig. 2 eine Darstellung der erfindungsgemäßen Stromschiene 10 von Fig. 1 im Querschnitt zeigt. Gemäß dem ersten Ausführungsbeispiel ist die erfindungsgemäße Stromschiene 10 für bewegliche Stromverbraucher vorgesehen. Solche beweglichen Stromverbraucher sind in diesem Fall vorzugsweise elektrisch getriebene Fahrzeuge wie Schienenfahrzeuge (U-Bahn, S-Bahn, etc.).

Wie in den Fig. 1 und 2 gezeigt ist, umfasst die erfindungsgemäße Stromschiene 10 gemäß dem ersten Ausführungsbeispiel genau drei Profilteile, nämlich ein zwei Trägerprofilelemente 12, 14 umfassendes Trägerprofil(-teil) und ein mit dem Trägerprofil(-teil) formschlüssig und kraftschlüssig gekoppeltes und somit das Trägerprofil(-teil) zumindest abschnittsweise umgreifendes Kopfprofil(-teil) bzw. Halteprofil 16. Wie insbesondere der Figur 1 entnommen werden kann, sind sämtliche Profilteile 12, 14 und 16 der erfindungsgemäßen Stromschiene 10 langgestreckte Bauteile, welche beispielsweise durch Stahlprofile, Konstruktionsprofile, walzprofilierte Bleche etc. gebildet sein können.

In diesem Ausführungsbeispiel ist das Trägerprofil, d.h. sind die Trägerprofilelemente 12, 14, durch einen elektrisch leitfähigen Leichtmetallwerkstoff gebildet und dient bzw. dienen insbesondere zur Stromführung entlang der erfindungsgemäßen Stromschiene 10. Das Kopfprofil 16 wird durch ein Kopfprofilband gebildet, dessen Material im Vergleich zu dem Material der jeweiligen Trägerprofilelemente 12 und 14, d.h. zu dem Material des Trägerprofils, verschleißbeständiger ausgebildet ist. Dementsprechend dient das Kopfprofil 16 zum Stromabgriff des von dem Trägerprofil entlang der erfindungsgemäßen Stromschiene 10 geführten Stroms. Um die elektrische Leitfähigkeit zwischen dem Kopfprofil 16 und dem Trägerprofil und/oder zwischen den Trägerprofilelementen 12 und 14 zu begünstigen, ist eine nicht in den Figuren dargestellte leitfähige Schicht zwischen dem Trägerprofil und dem Kopfprofil 16 angeordnet. Diese kann in fester, pastöser oder flüssiger Form vorliegen und bereits vorab auf entsprechenden Abschnitten der Trägerprofilelemente und/oder des Kopfprofils 16 aufgebracht bzw. plattiert sein.

Wie insbesondere aus Figur 2 ersichtlich ist, umfasst das Trägerprofil das erste Trägerprofilelement 12 und das mit dem ersten Trägerprofilelement 12 gekoppelte zweite Trägerprofilelement 14, welche im bestimmungsgemäß zusammengesetzten Zustand in etwa ein Doppel-T-Profil ausbilden. Ferner kann der Figur 2 entnommen werden, dass das Kopfprofil 16 in etwa die Form eines C-Profils aufweist, d.h. das Kopfprofil 16 weist einen oberen planaren Abschnitt und zwei gegenüberliegende seitliche, vorzugsweise gekrümmte Abschnitte 16a, 16b auf. Das Kopfprofil 16 umgreift bzw. hintergreift im bestimmungsgemäß zusammengesetzten Zustand zumindest die Kopfabschnitte der Trägerprofilelemente 12, 14. Insbesondere wird durch die Ausgestaltung bzw. Geometrie der im bestimmungsgemäßen Zustand zusammengesetzten Trägerprofilelemente 12, 14 sowie die Ausgestaltung und Geometrie des Kopfprofils 16 eine form- und kraftschlüssige Verbindung zwischen dem Trägerprofil und dem Kopfprofil 16 hergestellt. Nähere Details zur Herstellung dieser form- und kraftschlüssigen Verbindung zwischen dem Trägerprofil und dem Kopfprofil 16 werden nachstehend noch näher erläutert.

Wie insbesondere in der in Figur 2 gezeigten Querschnittdarstellung der erfindungsgemäßen Stromschiene 10 erkennbar ist, umfasst das erste Trägerprofilelement 12 des Trägerprofils einen Fußabschnitt 22, einen an den Fußabschnitt 22 angrenzenden Mittel- bzw. Stegabschnitt 24 und einen an den Mittel- bzw. Stegabschnitt 24 angrenzenden Kopfabschnitt 26. Das erste Trägerprofilelement 12 bildet somit in etwa eine Hälfte des Doppel-T-Profils in Bezug auf eine Symmetrieachse (Achse verlaufend von unten nach oben in der Darstellung von Figur 2) des Doppel-T-Profils. Gleichermaßen umfasst das zweite Trägerprofilelement 14 des Trägerprofils einen Fußabschnitt 32, einen an den Fußabschnitt 32 angrenzenden Mittel- bzw. Stegabschnitt 30 und einen an den Mittel- bzw. Stegabschnitt 30 angrenzenden Kopfabschnitt 28. Das zweite Trägerprofilelement 14 bildet somit ebenso in etwa die andere Hälfte des Doppel-T-Profils in Bezug auf die Symmetrieachse des Doppel-T-Profils. Demnach umfasst das Trägerprofil bei bestimmungsgemäß zusammengesetzten Trägerprofilelementen 12, 14 einen Fußabschnitt, gebildet durch die Fußabschnitte 22, 32, einen Mittel- bzw. Stegabschnitt, gebildet durch die Mittel- bzw. Stegabschnitte 24, 30, und einen Kopfabschnitt, gebildet durch die Kopfabschnitte 26, 28.

Wie weiterhin der Fig. 2 entnommen werden kann, grenzen die Trägerprofilelemente 12, 14 im bestimmungsgemäß zusammengesetzten Zustand über konjugierte und einander zugewandte Flächen aneinander an. Mit anderen Worten, die einander angrenzenden Flächen definieren eine Kontaktfläche (ist eine elektrisch leitfähige Zwischenschicht vorgesehen, ist die Kontaktfläche keine im Wortlaut zu verstehende Kontaktfläche, sondern vielmehr eine Fläche, entlang derer bzw. über die die Kopplung der Trägerprofilelemente erfolgt), entlang der die beiden Trägerprofilelemente 12, 14 flächig miteinander gekoppelt sind. An den Fußabschnitten 22, 32 der Trägerprofilelemente 12, 14 ist die Kontakfläche 13b eben bzw. planar ausgebildet. Gleiches gilt im Wesentlichen auch für die Stegabschnitte 24 und 30 der Trägerprofilelemente 12, 14, mit der Ausnahme, dass die konjugierte Fläche des ersten Trägerprofilelements 12 in dem Stegabschnitt 24 einen Vorsprung 20 ausbildet, während die konjugierte Fläche des zweiten Trägerprofilelements 14 in dem Stegabschnitt 30 eine Aussparung 18 ausbildet. Dabei ist der Vorsprung 20 in die Aussparung 18 bei bestimmungsgemäß zusammengesetzten Trägerprofilelementen 12, 14 eingesetzt. Der Vorsprung 20 und die Aussparung 18 verlaufen vorzugsweise geradlinig entlang der Längsrichtung der Trägerprofilelemente 12, 14, wodurch sich eine Zentrierung der Trägerprofilelemente 12, 14 beim bestimmungsgemäßen Zusammensetzen mit dem Kopfprofil 16 erzielen lässt. Im Bereich der Kopfabschnitte 26, 28 der Trägerprofilelemente 12, 14 ist die Kontaktfläche 13a gekrümmt. Der Krümmungsradius in diesem Abschnitt 13a der Kontaktfläche ist vorzugsweise ortsabhängig und ermöglicht einen nachstehend noch näher erläuterten Eindrehmechanismus 34. Insbesondere ist die konjugierte Fläche am Kopfabschnitt des ersten Trägerprofilelements 12 konkav, so dass sie einen weiteren Vorsprung ausbildet, der in Richtung des zweiten Trägerprofilelements 14 ragt. Hingegen ist die konjugierte Fläche am Kopfabschnitt des zweiten Trägerprofilelements 14 konvex, so dass sie eine weitere Aussparung bildet, wobei zumindest das gleitende Zusammenwirken der gekrümmten Flächen der Kopfabschnitte 26, 28 der Trägerprofilelemente 12, 14 die Funktion des Eindrehmechanismus 34 in Zusammenwirkung mit dem Kopfprofil 16 ermöglicht, wie nachstehend noch näher erläutert wird.

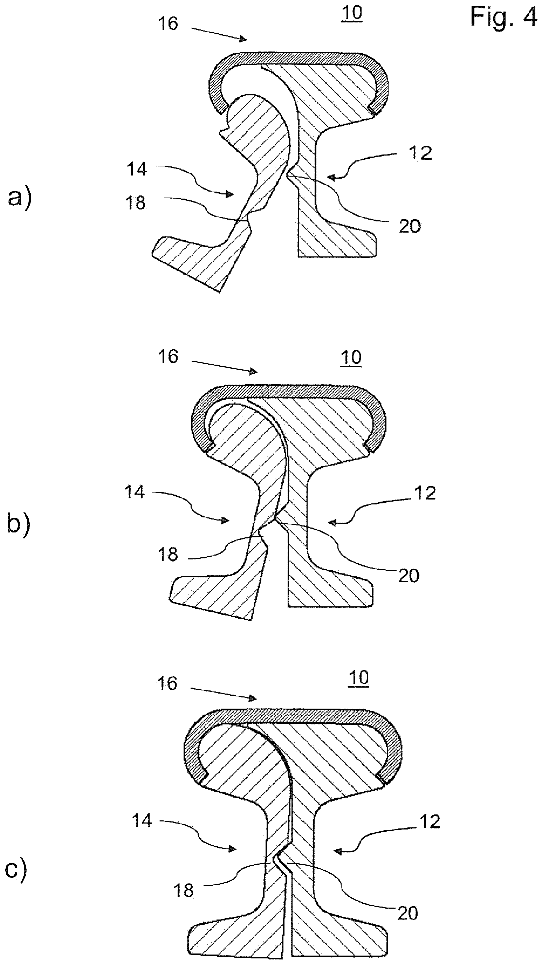

Beide Kopfabschnitte 26, 28 weisen jeweils an ihrer Außenfläche eine Stufe 15 auf, deren Tiefe im Wesentlichen der Dicke des Kopfprofils 16b entspricht. Diese Stufe erleichtert insbesondere den noch zu erläuternden Eindrehmechanismus des Trägerprofilelements 14, da die Stufe quasi als Ansatzpunkt bzw. Hebelpunkt für die Eindrehbewegung dienen kann (Fig. 4b).

Der gekrümmte Abschnitt 13a der Kontaktfläche erstreckt sich von der Unterseite des Kopfprofils 16, d.h. von dem in Fig. 2 gezeigten Ende 13c bis im Wesentlichen zu einer in Fig. 2 nicht dargestellten, horizontal verlaufenden hypothetischen Linie, welche die Innenkanten der Stufen 15 des Kopfteils 16 verbindet. Das Ende 13c ist näher zu dem seitlichen gekrümmten Abschnitt 16b als dem seitlichen gekrümmten Abschnitt 16a angeordnet.

Der Eindrehmechanismus 34 wird somit durch die Trägerprofilelemente 12 und 14, zumindest durch deren Kopfabschnitte 26 und 28, ermöglicht, die derart ausgestaltet sind, dass die Trägerprofilelemente 12 und 14 in Abhängigkeit von ihrer jeweiligen Lage zueinander die formschlüssige und kraftschlüssige Verbindung mit dem Kopfprofil 16 eingehen oder aufheben können, sofern die Trägerprofilelemente in das C-förmige Kopfprofil über die Öffnungsseite des C (d.h. senkrecht zur Längsachse des Kopfprofils) eingesetzt werden. Insbesondere lässt sich anhand der Lage der Trägerprofilelemente 12, 14 zueinander zumindest die Geometrie, insbesondere die Breite des Kopfabschnitts des Trägerprofils einstellen. Mit anderen Worten führt ein Gleiten der konvexen Fläche am Kopfabschnitt 28 des zweiten Trägerprofilelements 14 auf der konkaven Fläche am Kopfabschnitt 26 des ersten Trägerprofilelement 12 je nach Lageänderung der Trägerprofilelemente 12, 14 zueinander zu einer Vergrößerung oder Verkleinerung der Geometrie, insbesondere der Breite, des Kopfabschnitts des Trägerprofils. Selbstverständlich ändern sich dadurch auch die Lage des Mittelabschnitts und des Fußabschnitts der Trägerprofilelemente 12, 14 zueinander, was jedoch in diesem Ausführungsbeispiel zur Herstellung des Form- und/oder Kraftschlusses mit dem Kopfprofil 16 nicht unmittelbar beiträgt. Insbesondere sind die Trägerprofilelemente 12 und 14 derart ausgestaltet, dass die formschlüssige Verbindung zwischen den Trägerprofilelementen 12 und 14 und dem Kopfprofil 16 erst dann ausgebildet wird, wenn die Trägerprofilelemente 12, 14 eine erste bestimmte Lagebeziehung zueinander bei Einsatz in das C-förmige Kopfprofil 16 erfüllen. In diesem Fall ist die Geometrie des Kopfabschnitts des Trägerprofils dergestalt, dass der Kopfabschnitt innerhalb des C-förmigen Kopfprofils 16 mit Spiel zum Kopfprofil 16 angeordnet ist und daher innerhalb des C-förmigen Kopfprofils 16 bewegbar, aber nicht aus dem C-förmigen Kopfprofil 16 herausziehbar ist.

Ferner sind die Trägerprofilelemente 12 und 14 derart ausgestaltet, dass zusätzlich eine kraftschlüssige Verbindung (zusätzlich zu der formschlüssigen Verbindung) zwischen den Trägerprofilelementen 12 und 14 und dem Kopfprofil 16 erst dann ausgebildet wird, wenn die Trägerprofilelemente eine zweite bestimmte Lagebeziehung zueinander bei Einsatz in das C-förmige Kopfprofil 16 erfüllen. In diesem Fall ist die Geometrie des Kopfabschnitts des Trägerprofils dergestalt, dass der Kopfabschnitt innerhalb des C-förmigen Kopfprofils 16 zumindest abschnittsweise ohne Spiel zum Kopfprofil 16 angeordnet ist und daher innerhalb des C-förmigen Kopfprofils 16 unbeweglich und verklemmt ist. Dementsprechend ist der Kopfabschitt des Trägerprofils ebenso wenig aus dem C-förmigen Kopfprofil 16 herausziehbar. Sofern also die form- und kraftschlüssige Verbindung des Trägerprofils mit dem Kopfprofil 16 hergestellt ist, befinden sich die Trägerprofilelemente 12, 14 vorzugsweise in deren bestimmungsgemäß zusammengesetzten Zustand.

Wichtig dabei ist, dass die formschlüssige und kraftschlüssige Kopplung beider Trägerprofilelemente 12, 14 entlang des Abschnittes 13a, und vorzugsweise auch über einen oberen Bereich des Abschnittes 13b der Kontaktfläche ausschließlich durch das Kopfprofil 16 bewirkt wird.

Auch wenn dies in der Fig. 2 nicht explizit dargestellt ist, sind die Fußabschnitte 22, 32 der Trägerprofilelemente 12, 14 zusätzlich über eine stoffschlüssige Verbindung, vorzugsweise über eine Schweißverbindung, noch bevorzugter über eine FSW-Schweißnaht fest miteinander verbunden. Diese stoffschlüssige Verbindung bewirkt eine Kopplung beider Trägerprofilelemente 12, 14 nur im Bereich der Fußabschnitte 22, 32, aber nicht in dem Abschnitt 13a der Kontaktfläche. Alternativ können im Bereich der Fußabschnitte 22, 32 ebenso formschlüssige oder kraftschlüssige Verbindungen, insbesondere zerstörungsfreie lösbare oder nicht zerstörungsfreie lösbare Verbindungen, verwendet werden.

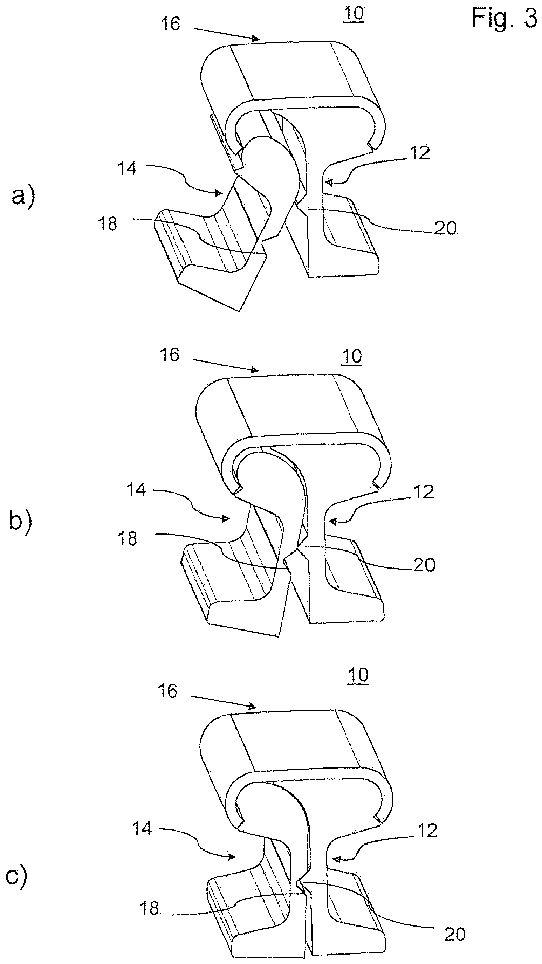

Im Folgenden wird die Montage der erfindungsgemäßen Stromschiene 10 unter Bezugnahme auf die Fig. 3 a)-3 c) und 4 a)-c) beschrieben. Fig. 3a)-c) zeigen diverse perspektivische Darstellungen der erfindungsgemäßen Stromschiene 10 von Fig. 1 zu unterschiedlichen Montageschritten, während Fig. 4a)-c) diverse Darstellungen der erfindungsgemäßen Stromschiene 10 von Fig. 1 im Querschnitt zu unterschiedlichen Montageschritten zeigen.

Wie insbesondere aus den Fig. 3 a) und 4 a) entnommen werden kann, wird zunächst das erste Trägerprofilelement in dem C-förmigen Kopfprofil 16 (von der Öffnungsseite des C-förmigen Kopfprofils 16 her) so angeordnet, dass dessen Kopfabschnitt 26 von einem Abschnitt des Kopfprofils 16 umgriffen bzw. hintergriffen wird und das Kopfprofil 16 und das erste Trägerprofilelement 12 aneinander (über eine konjugierte Außenfläche des ersten Trägerprofilelements 12 und eine konjugierte Innenfläche des C-förmigen Kopfprofils 16) angrenzen. In diesem Montagezustand liegt jedoch noch keine formschlüssige oder kraftschlüssige Verbindung zwischen dem ersten Trägerprofilelement 12 und dem Kopfprofil 16 vor, da das erste Trägerprofilelement ohne Weiteres wieder aus dem C-förmigen Kopfprofil 16 entfernt werden kann.

Anschließend wird das zweite Trägerprofilelement 14 über dessen Kopfabschnitt 28 in das Kopfprofil 16 über quasi eine "Drehbewegung" aufgrund der Ausgestaltung der konjugierten gekrümmten Flächen der Trägerprofilelemente 12, 14 eingesetzt, so dass bei weiterer Eindrehbewegung des zweiten Trägerprofilelements 14 allmählich der Kopfabschnitt 28 des zweiten Trägerprofilelements 14 von dem verbleibenden Abschnitt des C-förmigen Kopfprofils 16 umgriffen wird. D.h. der Kopfabschnitt des Trägerprofils wird durch die Änderungen der Lagebeziehung zwischen den Trägerprofilelementen 12 und 14 allmählich breiter bzw. die Geometrie des Kopfabschnitts wird vergrößert bzw. in gewissen Richtungen verändert.

Fig. 3 b) und 4 b) zeigen eine Lage der Trägerprofilelemente 12 und 14, bei der sich die Trägerprofilelemente 12 und 14 in der ersten bestimmten Lagebeziehung zueinander bei Einsatz in das C-förmige Kopfprofil 16 befinden und daher zumindest die formschlüssige Verbindung mit dem Kopfprofil 16 herstellen. Insbesondere wird die formschlüssige Verbindung zwischen den Trägerprofilelementen 12, 14 und dem Kopfprofil 16 deshalb hergestellt, da sich bei dieser Lage der Trägerprofilelemente 12, 14 deren Kopfabschnitte 26, 28 nicht aus dem C-förmigen Kopfprofil 16 herausziehen lassen, sondern von dem C-förmigen Kopfprofil 16 blockiert werden, insbesondere von den die Kopfabschnitte 26, 28 der Trägerprofilelemente 12, 14 hintergreifenden bzw. umgreifenden Abschnitten des C-förmigen Kopfprofils 16. Mit anderen Worten wurde die Geometrie des Kopfabschnitts des Trägerprofils derart geändert bzw. in gewisse Richtungen vergrößert, dass der Kopfabschnitt des Trägerprofils innerhalb des C-förmigen Kopfprofils 16 einen Formschluss mit dem Kopfprofil 16 eingeht.

Durch weiteres Eindrehen des zweiten Trägerprofilelements 14 in das Kopfprofil 16 gelangt, wie in den Fig. 3 c) und 4 c) gezeigt ist, der Vorsprung 20 des ersten Trägerprofilelements 12 allmählich in die Aussparung 18 des zweiten Trägerprofilelements 14, wodurch allmählich die Zentrierung der Trägerprofilelemente 12, 14 bewerkstelligt wird. Weiterhin wird die formschlüssige Verbindung zwischen den Trägerprofilelementen 12, 14 und dem Kopfprofil 16 aufrechterhalten, wobei allmählich eine kraftschlüssige Verbindung zwischen den Trägerprofilelementen 12, 14, insbesondere dem Kopfabschnitt des Trägerprofils, und dem Kopfprofil 16 hergestellt wird. D.h. der Kopfabschnitt des Trägerprofils wird von dem C-förmigen Kopfprofil 16 nun derart umgriffen, dass eine gewisse Verspannung bzw. Verklemmung zwischen dem Trägerprofil und dem C-förmigen Kopfprofil 16 besteht. D.h. sobald die Trägerprofilelemente 12 und 14 vollständig aneinander angrenzen, werden deren Kopfabschnitte von dem Kopfprofil 16 derart umgriffen, dass sowohl eine formschlüssige als auch eine kraftschlüssige Verbindung zwischen den Trägerprofilelementen 12, 14 und dem Kopfprofil 16 vorliegen. Mit anderen Worten wurde die Geometrie des Kopfabschnitts des Trägerprofils derart verändert bzw. in gewisse Richtungen vergrößert, dass der Kopfabschnitt des Trägerprofils innerhalb des C-förmigen Kopfprofils 16 einen Form- und Kraftschluss mit dem Kopfprofil 16 eingeht.

Zur Aufrechterhaltung des Form- und Kraftschlusses, insbesondere der Verspannung bzw. Verklemmung zwischen den Trägerprofilelementen 12 und 14 und dem Kopfprofil 16, werden die Trägerprofilelemente 12 und 14 vorzugsweise an deren Fußabschnitten 22 und 32 miteinander verschweißt. Die Montage der Stromschiene 10 ist somit zunächst abgeschlossen.

Um die erfindungsgemäße Stromschiene nun erneut demontieren zu können, ist es lediglich erforderlich, die Verschweißung beider Trägerprofilelemente 12 und 14 zu entfernen, beispielsweise mittels eines Trennschnitts, und die vorgenannten Montageschritte umgekehrt durchzuführen. Dadurch werden zunächst die kraftschlüssige Verbindung und anschließend die formschlüssige Verbindung auf analoge Weise wieder aufgehoben.

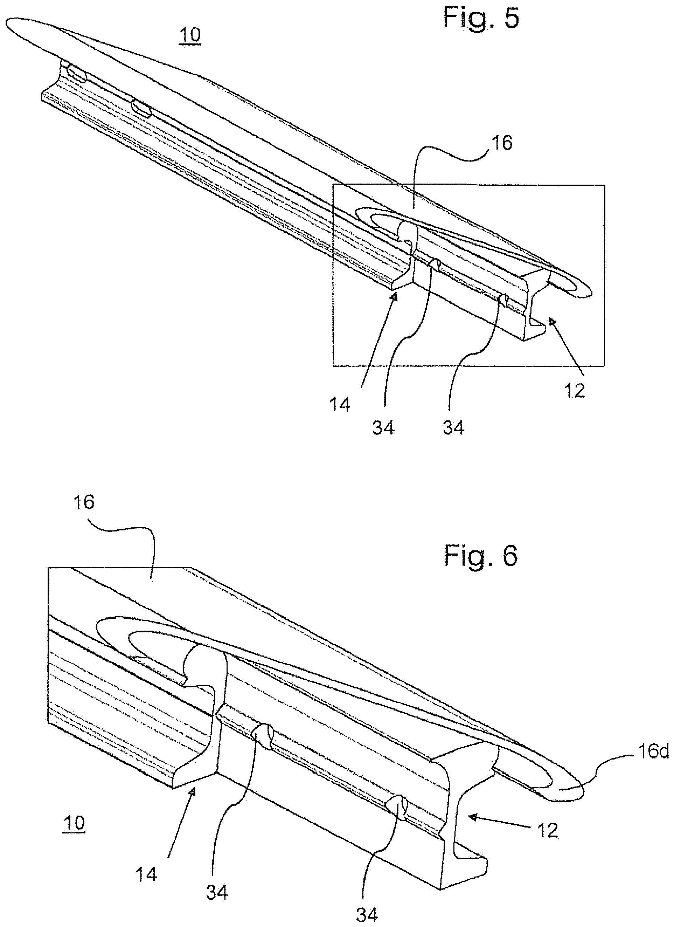

Fig. 5 zeigt eine perspektivische Darstellung einer erfindungsgemäßen Stromschiene 10 gemäß einem zweiten Ausführungsbeispiel der Erfindung, während Fig. 6 eine vergrößerte Darstellung des in Fig. 5 gekennzeichneten Bereichs zeigt. Zur Vermeidung von Wiederholungen wird bei der Beschreibung dieses zweiten Ausführungsbeispiels lediglich auf die Unterschiede zu der Stromschiene 10 gemäß dem ersten Ausführungsbeispiel näher eingegangen.

Im Wesentlichen entspricht die erfindungsgemäße Stromschiene 10 gemäß dem zweiten Ausführungsbeispiel der Stromschiene 10 gemäß dem ersten Ausführungsbeispiel. Das Trägerprofil der erfindungsgemäßen Stromschiene 10 gemäß dem zweiten Ausführungsbeispiel ist durch das erste Trägerprofilelement 12 und das mit dem ersten Trägerprofilelement 12 gekoppelte zweite Trägerprofilelement 14 ausgebildet, welche axial die gleiche Länge aufweisen, wobei in diesem Fall die Trägerprofilelemente 12, 14 derart axial versetzt zueinander angeordnet sind, das an den jeweiligen Enden der Trägerprofilelemente 12 und 14 ein axialer Versatz zwischen den jeweiligen Enden der Trägerprofilelemente 12 und 14 herbeigeführt wird. Wie insbesondere in den Fig. 5 und 6 ersichtlich ist, kann dementsprechend der Endabschnitt des ersten Trägerprofilelements 12, der über den Endabschnitt des zweiten Trägerprofilelements 14 hinaussteht, als Ankopplungsstelle für eine weitere entsprechend ausgebildete erfindungsgemäße Stromschiene 10 verwendet werden. Zu diesem Zweck ist das erste Trägerelement 12 mit einer Verbindungseinrichtung 34 vorgesehen, welche im dargestellten Fall durch Bohrungen, beispielsweise durch Rundlochbohrungen und Langlochbohrungen, für eine Schrauben-Mutter-Verbindung ausgebildet wird. Selbstverständlich können andere dem Fachmann bekannte Verbindungseinrichtungen zur Kopplung der jeweiligen Trägerprofilelemente unterschiedlicher Stromschienen zum Einsatz kommen.

Durch geeignete Wahl der axialen Länge des Versatzes beider Trägerprofilelemente 12, 14 kann die Stromdichte in diesem Bereich variabel gestaltet werden.

Das Kopfprofil 16 in dem axialen Versatzbereich verläuft schräg zur Längsrichtung der Stromschiene. Der Winkel zur Längsrichtung beträgt vorzugsweise 45°, kann aber auch in einem Bereich 30° bis 60° liegen. Wie in Fig. 6 ersichtlich ist, steht der Teil des Kopfprofils 16, der das axial vorstehende Trägerprofilelement 12 umgreift, von diesem axial vor, und der Teil des Kopfprofils 16, der das axial zurückversetzte Trägerprofilelement 14 umgreift, axial von diesem zurück. Somit ist der Kopfabschnitt 26 des Trägerprofilelements 12 teilweise von dem Kopfprofil 16 überdeckt, während der Kopfabschnitt 28 des Trägerprofilelements 14 durch das in diesem Bereich axial zurückversetzte Kopfprofil 16 teilweise freigelegt ist.

Des Weiteren kann die Stirnfläche bzw. Kontaktfläche 16d eine schräg nach innen verlaufende Phase aufweisen. Das an diese Stirnfläche 16d axial anzusetzende Kopfprofil einer weiteren Stromschiene weist eine dazu komplementäre Phase auf, wodurch auch senkrecht, d.h. entlang der Schwerkraft oder in Höhenrichtung der Stromschiene wirkende Kräfte von axial zusammengesetzten Stromschienen gut absorbiert werden können und ein vertikal durchgehenden Spalt zwischen zwei axial zusammengesetzten Stromschienen vermieden wird.

Das axiale Ende des Kopfprofils 16 stellt einen Gehrungsschnitt dar, der mehrere Vorteil mit sich bringt. So ist die Kontaktfläche 16d im Vergleich zu einem senkrecht zur Längsrichtung verlaufenden Schnitt vergrößert, und das Kopfprofil kann auch lateral zur Längsrichtung wirkende Kräfte besser aufnehmen. Darüber hinaus erfährt der auf der Stromschiene schleifende Stromabnehmer beim Überfahren weniger von diesem Übergangsbereich, da er zu einem gegebenen Zeitpunkt diesen Übergangsbereich nicht auf einmal überfährt, sondern quasi nur Stück für Stück.

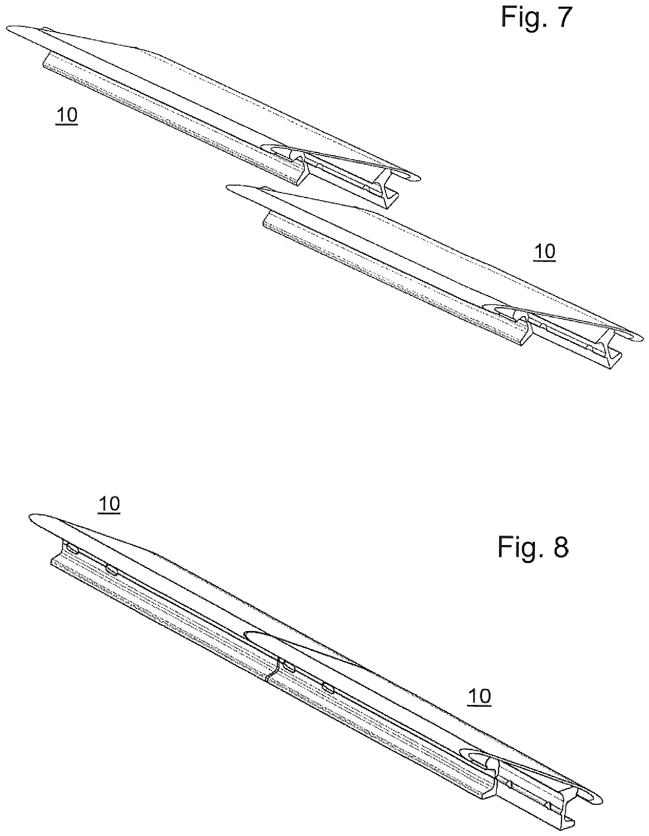

Fig. 7 zeigt eine perspektivische Darstellung einer erfindungsgemäßen Anordnung von den erfindungsgemäßen Stromschienen 10 von Figur 5 vor der axialen Kopplung der erfindungsgemäßen Stromschienen 10. Fig. 8 zeigt eine perspektivische Darstellung der erfindungsgemäßen Anordnung von erfindungsgemäßen Stromschienen 10 von Figur 5 nach der axialen Kopplung der erfindungsgemäßen Stromschienen 10.

Wie den Fig. 7 und 8 zu entnehmen ist, können unterschiedliche erfindungsgemäße Stromschienen 10 miteinander gekoppelt werden. Zur axialen Kopplung der Stromschienen 10 wird das Ende eines der Trägerprofilelemente 12 oder 14 der einen Stromschiene 10 mit einem Ende des jeweils anderen der Trägerprofilelemente 12 oder 14 der anderen Stromschiene 10 gekoppelt. Wie vorstehend erwähnt ist, ist zur Kopplung der jeweiligen Trägerprofilelemente 12 und 14 unterschiedlicher Stromschienen 10 die Verbindungseinrichtung 34 in Form von Bohrungen vorgesehen, so dass vorzugsweise die Mittelabschnitte 24, 32 durch eine Schrauben-Mutter-Verbindung starr miteinander verbunden werden können. Vorzugsweise wird ein Trägerprofilelement, bevorzugt dessen Mittelabschnitt einer Stromschiene 10 mit Rundlochbohrungen vorgesehen, während das jeweils andere Trägerprofilelement, bevorzugt dessen Mittelabschnitt der anderen Stromschiene 10 mit Langlochbohrungen vorgesehen ist. Dadurch lässt sich eine Dehnfuge zwischen miteinander gekoppelten Stromschienen 10 in besonders vorteilhafter Weise einstellen, so dass Materialbewegungen der jeweiligen Komponenten der Stromschiene 10 kompensiert werden können. Wie weiter aus den Fig. 7 und 8 ersichtlich ist, sind die Kopfprofile 16 unterschiedlicher erfindungsgemäßer Stromschienen 10 mit entsprechenden Gehrungsabschnitten ausgebildet, so dass ein bündiges aneinanderfügen der unterschiedlichen erfindungsgemäßen Stromschienen 10 ermöglicht wird. Alternativ zu den Gehrungsabschnitten können aber auch einander korrespondierende stufige Abschnitte des Kopfprofils 16 unterschiedlicher Stromschienen 10 vorgesehen sein, um zwei unterschiedliche Stromschienen 10 bündig (alternativ auch mit einer Dehnungsfuge) miteinander verbinden zu können.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Stromschiene
- 12: erstes Trägerprofilelement
- 13a-c: Kontaktfläche
- 14: zweites Trägerprofilelement
- 15: Stufe
- 16: Kopfprofil bzw. Halteprofilband
- 16a: erster gekrümmter Abschnitt - Kopfprofil
- 16b: zweiter gekrümmter Abschnitt - Kopfprofil
- 16c: Ende des Kopfprofils
- 16d: Stirnfläche - Kopfprofil
- 18: Aussparung
- 20: Vorsprung
- 22: Fußabschnitt - erstes Trägerprofilelement
- 24: Mittelabschnitt - erstes Trägerprofilelement
- 26: Kopfabschnitt - erstes Trägerprofilelement
- 28: Kopfabschnitt - zweites Trägerprofilelement
- 30: Mittelabschnitt - zweites Trägerprofilelement
- 32: Fußabschnitt - zweites Trägerprofilelement
- 34: Verbindungseinrichtung

## Patentansprüche

1. Stromschiene (10) für bewegliche Stromverbraucher, insbesondere für elektrisch getriebene Fahrzeuge, vorzugsweise Schienenfahrzeuge, mit einem Trägerprofil, das ein erstes Trägerprofilelement (12) und ein zweites Trägerprofilelement (14) umfasst, wobei das erste Trägerprofilelement eine erste Profilelementfläche und das zweite Trägerprofilelement eine zweite Profilelementfläche, die der ersten Profilelementfläche zugewandt ist, aufweist, wobei die erste und die zweite Profilelementfläche zumindest abschnittsweise gekrümmt sind und eine abschnittsweise gekrümmte Fläche (13a, 13b) bilden, entlang derer die Trägerprofilelemente (12, 14) miteinander gekoppelt sind, und einem Kopfprofil (16), das einen ersten seitlichen Abschnitt (16a) und einen gegenüberliegenden zweiten seitlichen Abschnitt (16b) aufweist und das mit dem ersten Trägerprofilelement (12) und dem zweiten Trägerprofilelement (14) formschlüssig und/oder kraftschlüssig verbunden ist, wobei dem Kopfprofil (16) zugewandte Enden der Profilelementflächen näher dem zweiten seitlichen Abschnitt (16b) als dem ersten seitlichen Abschnitt (16a) angeordnet sind, **dadurch gekennzeichnet, dass** die beiden Trägerprofilelemente (12, 14) im Wesentlichen die gleiche Höhe besitzen und durch das Kopfprofil (16) entlang der Fläche (13a, 13b) formschlüssig und/oder kraftschlüssig miteinander gekoppelt sind.

2. Stromschiene (10) gemäß Anspruch 1, wobei ein Abschnitt (13a) der Fläche (13a, 13b) einen ortsabhängigen Krümmungsradius aufweist.

3. Stromschiene (10) nach Anspruch 2, wobei der Abschnitt (13a), in Höhenrichtung der Trägerprofilelemente (12, 14) gesehen, im Wesentlichen mit einem Ende (16c) der seitlichen Abschnitte (16a, 16b) des Kopfprofils (16) fluchtet.

4. Stromschiene (10) nach Anspruch 2 oder 3, wobei, in Höhenrichtung der Trägerprofilelemente (12, 14) gesehen, der sich an den Abschnitt (13a) nach unten anschließende Abschnitt (13b) der Fläche (13) im Wesentlichen planar ist.

5. Stromschiene (10) gemäß einem der Ansprüche 1 bis 4, wobei der erste seitliche Abschnitt (16a) und der zweite seitliche Abschnitt (16b) des Kopfprofils (16) die Trägerprofilelemente (12, 14) zumindest teilweise umgreifen, um den Formschluss und/oder Kraftschluss zwischen dem Trägerprofil und dem Kopfprofil (16) zu bilden.

6. Stromschiene (10) gemäß einem der Ansprüche 1 bis 5, wobei die Trägerprofilelemente (12, 14) jeweils einen dem Kopfprofil (16) zugewandten Kopfabschnitt (26, 28) umfassen, der eine Stufe (15) aufweist, deren Tiefe im Wesentlichen der Dicke des Kopfprofils (16) entspricht.

7. Stromschiene (10) gemäß einem der Ansprüche 1 bis 6, wobei das Trägerprofil ein Doppel -T- Profil und/oder das Kopfprofil (16) ein C-Profil aufweist.

8. Stromschiene (10) gemäß einem der Ansprüche 1 bis 7, wobei zwischen dem Trägerprofil und dem Kopfprofil (16) und/oder zwischen den Trägerprofilteilen (12, 14) eine elektrisch leitfähige Schicht angeordnet ist.

9. Stromschiene (10) gemäß einem der Ansprüche 1 bis 8, wobei die Trägerprofilelemente (12, 14) jeweils einen Fußabschnitt (22, 32) umfassen, und wobei die Fußabschnitte (22, 32) über eine stoffschlüssige Verbindung miteinander verbunden sind.

10. Stromschiene (10) gemäß einem der Ansprüche 1 bis 9, wobei in Längsrichtung der Stromschiene (10) die Trägerprofilelemente (12, 14) jeweils axiale Enden aufweisen, die axial zueinander versetzt sind.

11. Stromschiene (10) gemäß Anspruch 10, wobei ein axiales Ende des Kopfprofils (16) schräg ausgebildet ist und sich zwischen den axial versetzten Enden der Trägerprofilelemente (12, 14) erstreckt.

12. System aus einer Vielzahl von axial zusammengesetzten Stromschienen (10) gemäß einem der Ansprüche 1 bis 11, wobei zwei axial benachbarte Stromschienen (10) beweglich zusammengesetzt sind, derart, dass eine Dehnungsfuge zwischen den Kopfprofilen (16) beider Stromschienen (10) vorgesehen ist.

13. System aus einer Vielzahl von axial zusammengesetzten Stromschienen (10) gemäß einem der Ansprüche 1 bis 11, wobei ein axiales Ende des Kopfprofils (16) schräg ausgebildet ist und sich zwischen axial versetzten Enden der Trägerprofilelemente (12, 14) erstreckt, und wobei zwei axial benachbarte Stromschienen (10) derart zusammengesetzt sind, dass ein Mittelabschnitt (24) des ersten Trägerprofilelements (12) einer Stromschiene mit einem Mittelabschnitt (30) des zweiten Trägerprofilelements (14) der anderen Stromschiene kraftschlüssig verbunden ist.

14. Verfahren zur Montage oder Demontage einer Stromschiene (10) gemäß einem der Ansprüche 1 bis 11, mit den folgenden Schritten:
Herstellen oder Aufheben der formschlüssigen und/oder kraftschlüssigen Verbindung zwischen den Trägerprofilelementen (12, 14) und dem Kopfprofil (16) durch Ändern der Lage des zweiten Trägerprofilelements (14), während das erste Trägerprofilelement (14) seine Lage zu dem Kopfprofil (16) nicht ändert.

15. Verfahren gemäß Anspruch 14, bei dem der Formschluss zwischen den Trägerprofilelementen (12, 14) und dem Kopfprofil (16) hergestellt wird, wenn das zweite Trägerprofilelement (14) eine erste bestimmte Lagebeziehung zu dem ersten Trägerprofilelement (12) und dem Kopfprofil (16) einnimmt.

16. Verfahren gemäß Anspruch 14 oder 15, bei dem der Kraftschluss zwischen den Trägerprofilelementen (12, 14) und dem Kopfprofil (16) hergestellt wird, wenn das zweite Trägerprofilelement (14) eine zweite bestimmte Lagebeziehung zu dem ersten Trägerprofilelement (12) und dem Kopfprofil (16) einnimmt.

17. Verfahren gemäß einem der Ansprüche 15 oder 16, bei dem das zweite Trägerprofilelement (14) die erste und die zweite Lagebeziehung einnimmt, indem es gedreht wird.

18. Verfahren gemäß einem der Ansprüche 14 bis 17, bei dem zwischen dem Trägerprofil und dem Kopfprofil (16) und/oder zwischen den Trägerprofilelementen (12, 14) eine elektrisch leitfähige Schicht angeordnet wird.

19. Verfahren gemäß einem der Ansprüche 14 bis 18, bei dem die Fußabschnitte (22, 32) der Trägerprofilelemente (12, 14) über eine stoffschlüssige Verbindung miteinander verbunden werden.

## Claims

1. Power rail (10) for movable power consumers, more particularly for electrically driven vehicles, preferably rail-borne vehicles, with a carrier profile which comprises a first carrier profile element (12) and a second carrier profile element (14), wherein the first carrier profile element has a first profile element surface and the second carrier profile element has a second carrier element surface which faces the first profile element surface, wherein the first and the second profile element surface are curved at least in sections and form a surface (13a, 13b) curved in sections along which the carrier profile elements (12, 14) are connected to each other and a head profile (16) which comprises a first lateral section (16a) and an opposing second lateral section (16b) and which is connected to the first carrier profile element (12) and the second carrier profile element (14) in a positive and/or non-positive manner, wherein ends of the profile elements facing the head profile (16) are arranged closer to the second lateral section (16b) than to the first lateral section (16a), **characterised in that** the two carrier profile elements (12, 14) are essentially of the same height and through the head profile (16) are connected to each other in a positive and/or non-positive manner along the surface (13a, 13b).

2. Power rail (10) according to claim 1, wherein one section (13a) of the surface (13a, 13b) has a location-dependent curvature radius.

3. Power rail (10) according to claim 2 wherein seen in the height direction of the carrier profile elements (12, 14) the section (13a) is essentially in alignment with an end (16c) of the lateral sections (16a, 16b) of the head profile (16).

4. Power rail (10) according to claim 2 or 3 wherein seen in the height direction of the carrier profile elements (12, 14) the section (13b) of the surface (13) adjoining the section (13a) at the bottom is essentially planar.

5. Power rail (10) according to any one of claims 1 to 4 wherein the first lateral section (16a) and the second lateral section (16b) of the head profile (16) at least partially encompass the carrier profile elements (12, 14) in order to form the positive and/or non-positive connection between the carrier profile and the head profile (16).

6. Power rail (10) according to any one of claims 1 to 5 wherein the carrier profile elements (12, 14) each comprise a head section (26, 28) which faces the head profile (16) and has a step (15) the depth of which essentially corresponds to the thickness of the head profile (16).

7. Power rail (10) according to any one of claims 1 to 6, wherein the carrier profile comprise a double T-shaped profile and/or the head profile (16) a C-shaped profile.

8. Power rail (10) according to any ane of claims 1 to 7 wherein an electrically conductive layer is arranged between the carrier profile and the head profile (16) and/or between the carrier profile sections (12, 14).

9. Power rail (10) according to any one of claims 1 to 8 wherein the carrier profile elements (12, 14) each comprise a foot section (22, 32) and wherein the foot sections (22, 32) are connected by means of a bonded connection.

10. Power rail (10) according to any one of claims 1 to 9 wherein in the longitudinal direction of the power rail (10) the carrier profile elements (12, 14) each have axial ends which are axially offset with regard to each other.

11. Power rail (10) according to claim 10 wherein an axial end of the head profile (16) is oblique and extends between the axially offset ends of the carrier profile elements (12, 14).

12. System comprising a plurality of axially assembled power rails (10) according to any one of claims 1 to 11, wherein two axially adjacent power rails (10) are movably assembled in such a way that an expansion joint is provided between the head profiles (16) of both power rails (10).

13. System comprising a plurality of axially assembled power rails (10) according to any one of claims 1 to 11 wherein an axial end of the head profile (16) is oblique and extends between axially offset ends of the carrier profile elements (12, 14) and wherein two axially adjacent power rails (10) are assembled in such a way that a middle section (24) of the first carrier profile element (12) of one power rail is connected to a middle section (30) of the second carrier profile element (14) of the other power rail in a non-positive manner.

14. Method of mounting or dismounting a power rail (10) according to any one of claims 1 to 11 with the following stages:
producing or removing the positive and/or non-positive connection between the carrier profile elements (12, 14) and the head profile (16) by changing the position of the second profile element (14) whereas the first carrier profile element (14) does not change its position in relation to the head profile (16).

15. Method according to claim 14 in which the positive connection between the carrier profile elements (12, 14) and the head profile (16) is produced when the second carrier profile element (14) assumes a first determined positional relationship with regard to the first carrier profile element (12) and the head profile (16)

16. Method according to claim 14 or 15 in which the non-positive connection between the carrier profile elements (12, 14) and the head profile (16) is produced when the second carrier profile element (14) assumes a second determined positional relationship with regard to the first carrier profile element (12) and the head profile (16).

17. Method according to any one of claims 15 of 16 in which the second carrier profile element (14) assumes the first and the second positional relationship by being turned.

18. Method according to any one of claims 14 to 17 in an electrically conductive layer is arranged between the carrier profile and the head profile (16) and/or between the carrier profile elements (12, 14).

19. Method according to any one of claims 14 to 18 in which the foot sections (22, 32) of the carrier profile elements (12, 14) are connected to each other by means of a bonded connection.

## Revendications

1. Barre conductrice (10) pour consommateurs de courant mobiles, en particulier pour véhicules électriques, de préférence véhicules sur rail, comprenant un profilé porteur qui comporte un premier élément (12) de profilé porteur et un deuxième élément (14) de profilé porteur, le premier élément de profilé porteur présentant une première surface d'élément de profilé et le deuxième élément de profilé porteur une deuxième surface d'élément de profilé orientée vers la première surface d'élément de profilé, la première et la deuxième surface d'élément de profilé étant au moins en partie courbes et formant une surface en partie courbe (13a, 13b), le long de laquelle les éléments de profilé porteur (12, 14) sont couplés ensemble, et comportant un profilé de tête (16) qui présente une première partie latérale (16a) et une deuxième partie latérale (16b) opposée et qui est relié au premier élément (12) de profilé porteur et au deuxième élément (14) de profilé porteur par complémentarité de forme et/ou à force, les extrémités des surfaces d'élément de profilé orientées vers le profilé de tête (16) étant plus proches de la deuxième partie latérale (16b) que de la première partie latérale (16a), **caractérisée en ce que** les deux éléments (12, 14) de profilé porteur ont essentiellement la même hauteur et sont couplés ensemble par l'intermédiaire du profilé de tête (16) le long de la surface (13a, 13b) par complémentarité de forme et/ou à force.

2. Barre conductrice (10) selon la revendication 1, selon laquelle une partie (13a) de la surface (13a, 13b) présente un rayon de courbure dépendant du lieu.

3. Barre conductrice (10) selon la revendication 2, selon laquelle la partie (13a), vue dans le sens de la hauteur des éléments (12, 14) de profilé porteur, est essentiellement alignée sur l'extrémité (16c) des parties latérales (16a, 16b) du profilé de tête (16).

4. Barre conductrice (10) selon la revendication 2 ou la revendication 3, selon laquelle, vue dans le sens de la hauteur des éléments (12, 14) de profilé porteur, la partie (13b), adjacente vers le bas à la partie (13a) de la surface (13), est essentiellement plane.

5. Barre conductrice (10) selon l'une quelconque des revendications 1 à 4, selon laquelle la première partie latérale (16a) et la deuxième partie latérale (16b) du profilé de tête (16) enserrent, du moins en partie, les éléments (12, 14) de profilé porteur afin de former une complémentarité de forme et/ou une liaison à force entre le profilé porteur et le profilé de tête (16).

6. Barre conductrice (10) selon l'une quelconque des revendications 1 à 5, selon laquelle les éléments (12, 14) du profilé porteur comprennent chacun une partie de tête (26, 28) orientée vers le profilé de tête (16), laquelle partie de tête présente un palier (15) dont la profondeur correspond essentiellement à l'épaisseur du profilé de tête (16).

7. Barre conductrice (10) selon l'une quelconque des revendications 1 à 6, selon laquelle le profilé porteur présente un profilé en T double et/ou le profilé de tête (16) un profilé en C.

8. Barre conductrice (10) selon l'une quelconque des revendications 1 à 7, selon laquelle une couche électriquement conductrice est disposée entre le profilé porteur et le profilé de tête (16) et/ou entre les parties (12, 14) du profilé porteur.

9. Barre conductrice (10) selon l'une quelconque des revendications 1 à 8, selon laquelle les éléments (12, 14) de profilé porteur comprennent chacun une partie de pied (22, 32) et les parties de pied (22, 32) sont reliées entre elles au moyen d'une liaison par matière.

10. Barre conductrice (10) selon l'une quelconque des revendications 1 à 9, selon laquelle, dans le sens longitudinal de la barre conductrice (10), les éléments (12, 14) de profilé porteur présentent chacun des extrémités axiales décalées axialement l'une par rapport à l'autre.

11. Barre conductrice (10) selon la revendication 10, selon laquelle une extrémité axiale du profilé de tête (16) est en diagonale et s'étend entre les extrémités axialement décalées des éléments (12, 14) de profilé porteur.

12. Système constitué d'une pluralité de barres conductrices (10), assemblées axialement, selon l'une quelconque des revendications 1 à 11, selon lequel deux barres conductrices (10) axialement voisines sont assemblées de manière mobile de telle sorte qu'un joint de dilatation est prévu entre les profilés de tête (16) des deux barres conductrices (10).

13. Système constitué d'une pluralité de barres conductrices (10), assemblées axialement, selon l'une quelconque des revendications 1 à 11, selon lequel une extrémité axiale du profilé de tête (16) est en diagonale et s'étend entre des extrémités, décalées axialement, des éléments (12, 14) de profilé porteur, et selon lequel deux barres conductrices (10) axialement voisines sont assemblées de telle sorte qu'une partie centrale (24) du premier élément (12) de profilé porteur d'une barre conductrice est relié à force avec une partie centrale (30) du deuxième élément (14) de profilé porteur de l'autre barre conductrice.

14. Procédé de montage ou démontage d'une barre conductrice (10) selon l'une quelconque des revendications 1 à 11, comportant les étapes suivantes :
Établissement ou neutralisation de la liaison par complémentarité de forme et/ou à force entre les éléments (12, 14) de profilé porteur et le profilé de tête (16) par modification de la position du deuxième élément (14) de profilé porteur, alors que le premier élément (14) de profilé porteur ne change pas de position par rapport au profilé de tête (16).

15. Procédé selon la revendication 14, selon lequel la complémentarité de forme entre les éléments (12, 14) de profilé porteur et le profilé de tête (16) est établie lorsque le deuxième élément (14) de profilé porteur vient occuper une certaine première position par rapport au premier élément (12) de profilé porteur et au profilé de tête (16).

16. Procédé selon la revendication 14 ou la revendication 15, selon lequel la liaison à force entre les éléments (12, 14) de profilé porteur et le profilé de tête (16) est établie lorsque le deuxième élément (14) de profilé porteur vient occuper une certaine deuxième position par rapport au premier élément (12) de profilé porteur et au profilé de tête (16).

17. Procédé selon l'une quelconque des revendications 15 ou 16, selon lequel le deuxième élément (14) de profilé porteur vient occuper la première et la deuxième position lorsqu'il est pivoté.

18. Procédé selon l'une quelconque des revendications 14 à 17, selon lequel une couche électriquement conductrice est disposée entre le profilé porteur et le profilé de tête (16) et/ou entre les éléments (12, 14) de profilé porteur.

19. Procédé selon l'une quelconque des revendications 14 à 18, selon lequel les parties de pied (22, 32) des éléments (12, 14) de profilé porteur sont reliées ensemble au moyen d'une liaison par matière.
